# EUROPEAN PATENT APPLICATION

(11) **EP 3 734 266 A1**
(43) Date of publication of application: **04.11.2020**
(21) Application number: 19172577.9
(22) Date of filing: 03.05.2019
(51) Int. Cl.: G01N 29/04, G01B 17/02, G01N 29/07, G01N 29/11, G01N 29/44

(54) **AUTOMATION OF THICKNESS MEASUREMENTS FOR NOISY ULTRASONIC SIGNALS**

(71) Applicant: Siemens Aktiengesellschaft, 80333 München (DE)
(72) Inventor: Goldammer, Matthias, 80687 München (DE); Sadovoy, Alexandr, 14059 Berlin (DE)

(57) **Abstract**

The invention relates to an automated method for determining a thickness of an object at a specific location, such as the determination of a wall thickness of a blade or a vane of a gas turbine. The invention further relates to a computer program product comprising instructions which, when the program is executed by a computer, cause the computer to carry out the steps of that method. Finally, the invention relates to an ultrasonic measurement device for automatically determining a thickness of an object at a specific location.

## Description

The present invention relates to an automated method for determining a thickness of an object at a specific location, such as the determination of a wall thickness of a blade or a vane of a gas turbine. The invention further relates to a computer program product comprising instructions which, when the program is executed by a computer, cause the computer to carry out the steps of that method. Finally, the invention relates to an ultrasonic measurement device for automatically determining a thickness of an object at a specific location.

Ultrasonic testing is a non-destructive testing method based on the propagation of ultrasonic waves in the object or material tested. In most common ultrasonic testing applications, very short ultrasonic pulse-waves with centre frequencies ranging from 0.1 to 15 MHz, and occasionally up to 50 MHz, are transmitted into materials to detect internal flaws or to characterize materials. A common example for ultrasonic testing is the determination of the thickness of an object by ultrasonic measurements.

Ultrasonic measurements for the determination of an object's thickness are typically carried out manually. An operator has to manually place an ultrasonic probe at a selected location and search for a position and orientation of the probe to achieve the best signal. The following measurement setup is typically chosen: The ultrasonic probe sends out an ultrasonic pulse and subsequently receives and records the reflected signal. A so-called A-scan (which is an abbreviation of "amplitude mode scan") represents the amplitude vs. time graph resulting from the capturing of the ultrasonic measurement signal. Any discontinuity in the material or any interface results in an echo, i.e. in a reflection. Such echoes may, for instance, originate from the front surface and the back surface of the object.

After the operator identified the optimal location, the object's thickness can be determined by the ultrasonic measurement system: The thickness of the object is determined by the measurement of the time between the characteristic signal peaks resulting from the ultrasonic wave reflections from the surfaces of the object. With a known speed of sound, the time between the peaks can be transformed into a distance, i.e. into the object's thickness.

A drawback of this prior art method is that it is time consuming and needs the attendance of an experienced user carrying out the measurements.

There do exist approaches wherein a robot arm holds an ultrasonic measurement probe, guides it to the surface of an object and performs an ultrasonic measurement, see e.g. the international patent application WO 2018/210501 A1. In this case, the captured ultrasound signals may even be evaluated automatically. Thus, the thickness of the object may be determined without any manual interaction, except the preparation of the measurement setup, which can, however, be carried out by an ordinary person without any specific ultrasound measurement knowledge.

However, such an approach generally only works for material giving back clear measurement signals. Whether a material gives back a "clear" measurement signal or a noisy A-scan oftentimes depends on the material properties. If, on the one hand, it is a homogeneous material without any peculiarities, a single and distinct peak can be expected. If, on the other hand, the material exhibits, for instance, a crystalline structure, which is either complex and/or irregular, an automatized evaluation of the measurement signals may not be possible or reliable. Furthermore, it may be required to search for an optimum measurement position around the selected position. In the prior art, an experienced user would be proficient to discern rapidly from the captured measurement signals whether a spot is a spot to take the measurement or not. An automatized system is generally not able to reliably make this choice.

The present invention tackles this open problem. Its objective is to provide a concept how to reliably determine the thickness of an object in an efficient manner, even for challenging ultrasonic measurement signals.

The problem is solved by the subject matter of the independent claims. Advantageous embodiments and variations are disclosed in the dependent claims.

According to the invention, an automated method for determining a thickness of an object at a specific location is provided. The following steps of the method are carried out automatically by an ultrasonic measurement device:
a) performing a plurality of ultrasonic measurements around the specific location by means of an ultrasonic probe of the ultrasonic measurement device,
b) recording and storing the measurement signals of the ultrasonic measurements by an evaluation unit of the ultrasonic measurement device,
c) determining at least one apparent thickness of the object for each measurement,
d) sorting the apparent thicknesses in a histogram, and
e) determining the thickness of the object by selecting the most frequently occurring apparent thickness in the histogram.

A first important aspect of the present invention is that a plurality of measurements are performed around the specific location where the thickness of the object shall be determined. Conventionally, only one measurement is taken at a specific location. Based on this single measurement, the thickness at that location is determined.

There may be the case that no meaningful measurement can be performed at a given location, e.g. if there exist significant material flaws (i.e. defects or the like) or geometric influences at the given location which impede the measurement. In that case, the operator usually recognizes the issue and manually searches for another location nearby with less undesired reflections of the ultrasonic signal in the material.

There also exists the variant that a plurality of measurements is taken based on which the thickness of the material is determined for a specific location. However, to the best knowledge of the inventors, multiple measurements, if at all, are always taken at the same location and the measurement results are subsequently averaged to determine a thickness of the material at that location.

The decisive advantage of taking measurements at plural locations slightly differing from each other is that the occurrence of several of the plural measurements which failed due to e.g. defects in the investigated material still do not impede the determination of a meaningful and reliable result for the material thickness.

A second important aspect of the present invention is that for each measurement which is carried out, one or more apparent thicknesses of the object to be investigated are identified. As a plurality of measurements are carried out, a plurality of apparent thicknesses does result. To extract one single thickness based on the many identified apparent thicknesses, the following approach is taken: All apparent thicknesses are listed in a histogram. This apparent thickness which most frequently occur in the histogram is assumed to be the thickness of the object, wherein that thickness can e.g. be referred to as "actual" or "true" thickness of the object at the specific location.

This approach benefits from its simplicity. Instead of relying on complex algorithms for extracting the actual thickness from the many apparent thicknesses, it is trusted that simply taking that thickness which has been extracted as apparent thickness the most frequently, in practice results in the correct determination of the actual thickness in most cases.

The notion of performing a plurality of ultrasonic measurements "around" the specific location at which the object's thickness needs to be determined, includes measuring the thickness at the very location. Thus, "measuring around" the specific location means "measuring around and optionally at" the specific location of interest.

The measurement signals of the ultrasonic measurements are also referred to as A-scans. "A-scan" is an abbreviation of "amplitude mode scan" and represents the amplitude (or: intensity) vs. time graph resulting from the capturing of the ultrasonic measurement signal.

Recording and storing the measurement signals are carried out by the evaluation unit. The evaluation unit may be located close to the object to be investigated. The evaluation unit may, for example, be configured as a central processing unit and a server of a computer. The evaluation unit may also be located in a remote distance away from the actual location where the measurement takes place. In this case, the evaluation unit may be placed in shared resources using techniques of cloud computing.

In an embodiment of the invention, each temporal distance between intensity peaks of the ultrasonic signal (A-scan) corresponding to the reflection of the ultra-sonic wave from the front and back walls of the object which is above a time-varying threshold is converted into one apparent thickness. The conversion of the intensity peak into the apparent thickness is mainly based on the time-wise (or: temporal) distance between the intensity peak corresponding to the reflection of the ultra-sonic wave at the back wall of the object and another reference intensity peak corresponding to the reflection of the ultra-sonic wave at the front wall of the object.

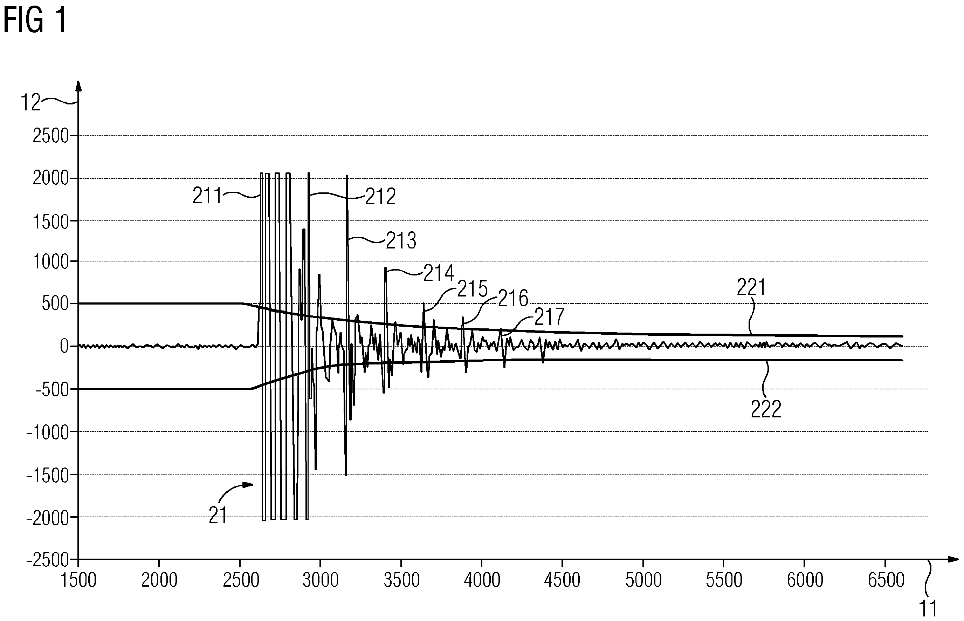

As it is exemplarily illustrated in Fig. 1 of the application, each ultrasonic measurement may comprise several distinct peaks. The task is to identify those peaks which correspond to an echo signal of the ultrasonic pulse being reflected (or: echoed) at the rear side of the object, as from the time delay of the echo the thickness of the object can be calculated. The challenge is that the identification of the respective peak needs to happen fully automatically.

A suggested way to do so is the use of a time-varying threshold. All peaks of which the amplitude lie above the threshold are potential candidates for echo signals related to the actual thickness of the object. In a first approach, all peaks above the threshold may be taken and calculated into thickness values. Further, the intensity (or: height) of the peak is not considered. More sophisticated approaches of selecting distinct peaks above the threshold as input for the histogram of apparent thicknesses will be detailed further below.

As the amplitude of the echoes decreases exponentially, the threshold advantageously also decreases exponentially, starting with the front surface echo until a value just above base noise is reached. Alternatively, the gain of the amplifier can be increased after the pulse is sent out exponentially which results in constant peak heights and a constant threshold can be used.

In an advantageous embodiment of the invention, multiple peaks lying above the threshold and lying within a predetermined timespan are converted into one single apparent thickness.

In other words, if there exist multiple peaks closely together timewise, it is suggested to only take one of the multiple peaks into account in the histogram.

Particularly, any peak above the threshold preceded by another peak within the predetermined timespan is discarded.

This means that only the first peak of the multiple peaks within one signal package is considered in the histogram, while all the following peaks within the same signal package of the ultrasonic pulse are left out.

In the context of this patent application, "within a predetermined timespan" is to be understood as the timespan which is defined as the minimal time interval between two separate signal packages in the investigated material.

In another advantageous embodiment of the invention, a time-dependent low pass filter is applied in the ultrasonic measurements. The time-dependent low pass filter comprises a cut-off frequency which decreases for increasing measurement time.

For ultrasonic measurements aiming to determine the thickness of an object, ultrasonic probes with a high bandwidth are generally used for obtaining a high resolution. But as the noise present in the ultrasonic measurements covers a large frequency range, the high bandwidth results in an elevated level of noise. Digitally filtering the signal after recording can reduce noise but this is typically only necessary for the low amplitude echoes occurring for large thicknesses. A time-dependent low pass filter with a cut-off frequency which decreases for increasing measurement time achieves both: The short time scales important for small thicknesses are essentially unfiltered, while high thicknesses benefit from increased signal-to-noise ratio by sacrificing resolution.

In another embodiment of the invention, a change in the polarity of the measured signals is taken into account by applying an appropriate offset to the respective measurement signals.

Any reflections of a sound wave from a boundary to a medium with lower impedance results in a polarity change of the signal, namely by a phase shift of 180°. For thickness measurements in metals, for instance, this means that backwall and repeat echoes have an inverted polarity to the front surface. The correct measurement of thicknesses therefore has to take the polarity into account which can be done by applying an offset of half a wavelength. As only the front surface differs in polarity the simplest way to apply the correction is by applying an offset to the front surface peak.

As already pointed out, one key feature of the inventive method is that a plurality of ultrasonic measurements around a specific location are carried out. Advantageously, at least twenty, in particular at least fifty, even more particularly at least one hundred individual ultrasonic measurements are carried out around the specific location to determine the thickness of the object at the specific location. The effect of a large number of ultrasonic measurements around the same location is a more stable and more robust estimation of the true thickness of the object at that position, compared to a small number of measurements.

The measurements may be carried out at predetermined locations relative to the specific location. For instance, the measurements may be carried out in a star-like and/or concentric pattern around the specific location.

Alternatively, the measurements may be carried out at random positions around the specific location.

In principle, the present method is applicable to a wide range of thicknesses from the micrometre range up to the centimetre range. However, the method is specifically suited for objects which feature a thickness in a range of 0.5 mm to 20 mm at the specific location where the thickness is to be determined.

In another embodiment of the invention, the material of the object comprises a grain structure at the specific location, in particular featuring an average grain size of about the thickness of the object at the specific location.

In contrast to some prior art methods which generally only works reliably if no grain structure in the material to be investigated or a grain structure with small grain sizes compared to the thickness of the object are present, the present method also works well if comparatively large grains exist in the material to be investigated. This is mainly due to the fact that many individual measurements at (slightly) different locations are carried out, so that measurement signals which are not useful because they are spoiled by grain boundaries or other flaws are compensated by plural valid measurements.

The present method is particularly well suited for metal materials. The present method may advantageously be used for determining the thickness of a blade or a vane of a gas or steam turbine. The present method may, for instance, be used to determine the (total) thickness of an object at a specific location. In the case that the object comprises a cavity and the cavity is separated from the exterior by a wall, the present method may also be used to determine the thickness of that wall. In that case, the present method could be called automated method for determining a wall thickness of an object at a specific location.

As the present method can be seen as a statistical method, it can also be used to broaden the range of the parameters used for the determination of the thickness of the object: In some cases, it is difficult to select the parameters for the algorithm to work with. For instance, for a large variation in the thickness, the threshold could be too high for large thicknesses when signals are weak but too low for thin areas. Using two or more sets of parameters, e.g. two different thresholds, on the same dataset and entering both results into the statistical analysis, the accessible range of the method can be increased. This multi-parameter statistical approach can also be applied to other parameters such as the minimal time between peaks or other inputs into the algorithm.

The present invention is furthermore directed to a computer program product comprising instructions which, when the program is executed by a computer, cause the computer to carry out the steps of the method according to one of the preceding claims.

As the determination of the thickness of the object is carried out automatically, the method is advantageously performed by the help of a computer program.

Finally, the invention also relates to an ultrasonic measurement device. The ultrasonic measurement device is made for automatically determining a thickness of an object at a specific location. The ultrasonic measurement device comprises an ultrasonic probe and an evaluation unit. The evaluation unit is configured to
- trigger the ultrasonic measurement device to perform a plurality of ultrasonic measurements at and around the specific location,
- record and store the measurement signals,
- determine at least one apparent thickness of the object for each measurement,
- sort the apparent thicknesses in a histogram, and
- determine the thickness of the object by selecting the most frequently occurring apparent thickness in the histogram.

All embodiments and variants which have been discussed in context with the method for determining the thickness of an object at a specific location also apply to the mentioned device. For the sake of conciseness, they are not repeated here expressis verbis.

In the following, the invention is illustrated by the help of accompanying drawings, of which
- Fig. 1: shows an ultrasonic measurement signal with several peaks above a predetermined threshold value; and
- Fig. 2: shows a histogram with a plurality of apparent thickness obtained from several ultrasonic measurements.

The Fig. 1 illustrates an ultrasonic measurement signal, commonly referred to as an A-scan, which has been obtained by sending out an ultrasonic pulse into an object and subsequently receiving and recording the reflected signal. The abscissa 11 (x-axis) relates to the time in dimensionless sample units. Note that a sample unit can be calculated into a time span. However, this is dependent on the specific ultrasonic measurement device, in particular on the specific ultrasonic measurement probe in use. The ordinate 12 (y-axis) relates to the intensity of the reflected ultrasonic measurement signal in decibels. The ultrasonic measurement signal - alternatively named as "A-scan" - is referred to with the reference sign 21; a time-varying threshold is referred to with the reference signs 221 and 222.

In the exemplary A-scan illustrated in Fig. 1, measurement artefacts (overshoots) which are to be ignored can be seen between approximately 2600 sample units and 3000 sample units. Subsequently, there exist distinct peaks with decreasing height between approximately 3000 sample units and 4800 units. In order to identify and filter out the relevant peaks, a positive threshold 221 and a negative threshold are applied to the measurement signal 21. As a consequence, only those peaks which lie above the threshold 221 and which do not belong to the measurement artefacts mentioned above are taken into account. By multiplying the time attributed to a peak with the speed of the ultrasonic wave in the investigated material, the thickness of the object can be calculated (in general, the obtained value for the thickness needs to be divided by two as the detected signal relates to an ultrasonic measurement signal travelled forth until the backwall, being reflected there and travelled back until the detector). Eventually, one apparent thickness thus results for each relevant peak of the A-scan.

In the example of Fig. 1, any peak above the threshold which is preceded by another peak within a predetermined timespan is discarded. As a result, only the peaks which are referred to by the reference signs 211, 212, 213, 214, 215, 216 and 217 are taken into account as positive intensity peaks. Likewise, only the relevant negative intensity peaks are taken into account, too. For the sake of clarity, the relevant negative intensity peaks are not referred to with reference signs in Fig. 1.

Each apparent thickness of an A-scan is listed in a histogram. As ultrasonic measurements are repeated for a plurality of different locations around the specific location for which the thickness shall be determined, many apparent thicknesses are obtained. They are all listed in the same histogram.

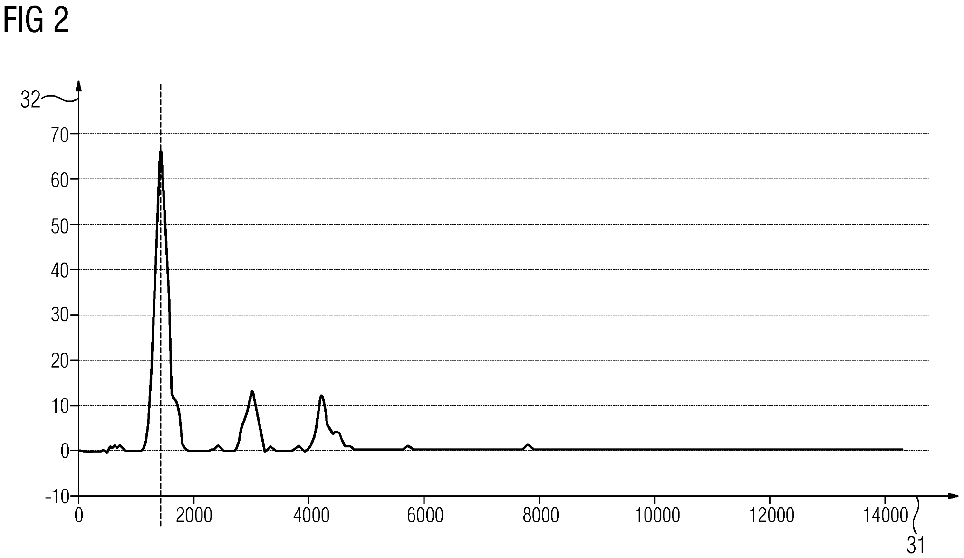

An example of such a resulting histogram is shown in Fig. 2. At the abscissa 31 (x-axis), the apparent thickness (again in sample units) is shown; at the ordinate 32 (y-axis), the number of related peaks to the respective apparent thickness is shown. To determine the true thickness out of the amount of obtained apparent thicknesses, simply the most frequently listed apparent thickness is taken. In the example of Fig. 2, the true thickness of the object at the specific location would correspond to approximately 1500 sample units. Note again, that these 1500 sample units still need to be calculated into a concrete thickness value. This is carried out by accounting for the specific measurement setup and for the specific ultrasonic measurement device in use.

An important advantage of the present method for determining the thickness of an object at a specific location is that the thickness can be determined with a generally satisfying reliability fully automatically - even if the material of the object features up to a certain degree of flaws and defects which normally impede or even prohibit automated ultrasonic measurements.

## Claims

1. Automated method for determining a thickness of an object at a specific location, the method comprising the following steps which are carried out automatically by an ultrasonic measurement device:
a) performing a plurality of ultrasonic measurements around the specific location by means of an ultrasonic probe of the ultrasonic measurement device,
b) recording and storing the measurement signals of the ultrasonic measurements by an evaluation unit of the ultrasonic measurement device,
c) determining at least one apparent thickness of the object for each measurement,
d) sorting the apparent thicknesses in a histogram, and
e) determining the thickness of the object by selecting the most frequently occurring apparent thickness in the histogram.

2. Method according to claim 1,
wherein each peak in the ultrasonic measurement, which is above a time-varying threshold, is converted into one apparent thickness.

3. Method according to claim 2,
wherein multiple peaks above the threshold lying within a predetermined timespan are converted into one single apparent thickness.

4. Method according to claim 3,
wherein any peak above the threshold preceded by another peak within the predetermined timespan is discarded.

5. Method according to one of the preceding claims,
wherein a time-dependent low pass filter with a cut-off frequency which decreases for increasing measurement time is applied in the ultrasonic measurements.

6. Method according to one of the preceding claims,
wherein a change in the polarity of the measured signals is taken into account by applying an appropriate offset to the respective measurement signals.

7. Method according to one of the preceding claims,
wherein at least twenty, in particular at least fifty, even more particularly at least one hundred, individual ultrasonic measurements are carried out around the specific location to determine the thickness of the object at the specific location.

8. Method according to one of the preceding claims,
wherein the measurements are carried out at predetermined locations relative to the specific location.

9. Method according to claim 8,
wherein the measurements are carried out in a star-like and/or concentric pattern around the specific location.

10. Method according to one of the claims 1 to 7,
wherein the measurements are carried out at random positions around the specific location.

11. Method according to one of the preceding claims,
wherein the thickness of the object is in a range of 0.5 mm to 20 mm.

12. Method according to one of the preceding claims,
wherein the material of the object comprises a grain structure at the specific location, in particular featuring an average grain size of about the thickness of the object at the specific location.

13. Method according to one of the preceding claims,
wherein the object is a blade or a vane of a gas turbine.

14. Computer program product comprising instructions which, when the program is executed by a computer, cause the computer to carry out the steps of the method according to one of the preceding claims.

15. Ultrasonic measurement device for automatically determining a thickness of an object at a specific location, the ultrasonic measurement device comprising an ultrasonic probe and an evaluation unit, wherein the evaluation unit is configured to
- trigger the ultrasonic measurement device to perform a plurality of ultrasonic measurements at and around the specific location,
- record and store the measurement signals,
- determine at least one apparent thickness of the object for each measurement,
- sort the apparent thicknesses in a histogram, and
- determine the thickness of the object by selecting the most frequently occurring apparent thickness in the histogram.
